# EUROPEAN PATENT SPECIFICATION

(11) **EP 4 018 807 B1**
(45) Date of publication and mention of the grant of the patent: **28.01.2026**
(21) Application number: 20854328.0
(22) Date of filing: 20.08.2020
(51) Int. Cl.: A01D 34/73, A01D 34/66

(54) **LAWN MOWER**
RASENMÄHER
TONDEUSE À GAZON

(30) Priority: 20.08.2019 CN 201910767209; 20.08.2019 CN 201921349270 U
(43) Date of publication of application: 29.06.2022
(73) Proprietor: Positec Power Tools (Suzhou) Co., Ltd., Suzhou, Jiangsu 215123 (CN)
(72) Inventor: JIAO, Shiping, Suzhou, Jiangsu 215123 (CN); ZHA, Xiahong, Suzhou, Jiangsu 215123 (CN); ZHAO, Fengli, Suzhou, Jiangsu 215123 (CN); LIU, Changhua, Suzhou, Jiangsu 215123 (CN)
(74) Representative: Kilburn & Strode LLP
(86) International application number: PCT/CN2020/110295
(87) International publication number: WO 2021/032168

(56) References cited:
- CN-A- 103 843 516
- CN-A- 103 843 516
- CN-U- 204 047 176
- CN-U- 208 095 206
- CN-U- 208 940 383
- CN-U- 208 940 383
- CN-U- 210 987 056
- JP-A- 2003 180 118
- JP-A- H10 150 824
- US-A- 4 262 476
- US-A- 4 351 144
- US-A- 4 351 144
- US-A1- 2019 045 707
- US-B1- 10 349 576
- US-B1- 10 349 576

## Description

### TECHNICAL FIELD

The present invention relates to a lawn mower, belonging to garden tools.

### BACKGROUND

An ordinary power lawn mower usually uses a middle portion of the cutting blades disposed on the same layer is a connecting portion, which is connected to a cutting deck by a connecting member. An output shaft of the power lawn mower drives the cutting deck to rotate to mow a lawn. However, when the blade cuts long grass, the cut grass remains in large pieces, and stems left on the lawn are excessively long.

Lawn mowers are e.g. known from US 2019/045707 A1, US 4 262 476 A, US 10 349 576 B1, CN 208 940 383 U, CN 103 843 516 A and JP 2003 180118 A.

### SUMMARY

An objective of the present invention is to provide a a lawn mower, so that long grass can be cut repeatedly into smaller pieces.

To achieve the foregoing objective, the present invention provides the following technical solutions: A lawn mower includes:
a housing;
a cutting assembly, mounted at the housing, and performing cutting work; and
a driving apparatus, including a motor and an output shaft, connected to the cutting assembly, and driving the cutting assembly to perform cutting work, where
the cutting assembly includes a cutting deck and at least two cutting element groups distributed at the cutting deck in a circumferential direction, the cutting deck is connected to the output shaft, cutting element groups of the at least two cutting element groups are respectively located at different heights of the output shaft, the cutting deck responds to driving of the driving apparatus to drive the at least two cutting element groups to rotate to form at least two cutting trajectories, and in different cutting trajectories, the distance between the cutting element group and a center point of the output shaft is not equal.

According to the invention, the cutting trajectories are circles, a diameter of the cutting trajectory of the cutting element group located above is greater than a diameter of the cutting trajectory of the cutting element group located below of wo adjacent cutting element groups, and the at least two cutting element groups are disposed layer by layer from the top to the bottom in a height direction of the cutting deck.

According to the invention, a radius difference between the cutting trajectories formed by the adjacent cutting element groups is less than or equal to 20 mm.

According to the invention, each cutting element group includes at least one cutting element, and the at least one cutting element is evenly distributed in the circumferential direction of the cutting deck.

According to the invention, a length by which the cutting element protrudes from the cutting deck is greater than or equal to 8 mm.

In an embodiment, the cutting elements within each cutting element group are distributed in a staggered manner in the circumferential direction of the cutting deck.

According to the invention, a spacing between the two adjacent cutting element groups is between 10 mm and 20 mm.

In an embodiment, a diameter of the cutting deck is less than or equal to 250 mm.

In an embodiment, mounting portions are disposed on the cutting deck, the mounting portions are used to fix the cutting element groups, and the mounting portions are located on an upper surface and a lower surface of the cutting deck.

In an embodiment, the cutting element groups are rotatably disposed on the mounting portions by connecting members.

In an embodiment, the lawn mower is configured to walk and/or work in a working area defined by a boundary, and includes a movement apparatus, supporting the housing, and used to drive the lawn mower to move; a control apparatus, electrically connected to the movement apparatus, the cutting assembly, and the driving apparatus, and used to control the driving apparatus to drive the lawn mower to walk and/or work automatically.

In an embodiment, the blade is a straight blade, and blade edges are disposed on both sides of the blade.

Compared with the prior art, the present invention has beneficial effects as follows: In the cutting assembly and the lawn mower of the present invention, the at least two cutting element groups are disposed at the different heights of the cutting deck, to enable the cutting assembly to be driven by the lawn mower to form the at least two cutting trajectories, and the cutting trajectories are distributed at the different heights of the cutting deck, so that long grass is cut repeatedly into smaller pieces.

The foregoing description is merely an overview of the technical solutions of the present invention. To understand the technical solutions of the present invention more clearly, implementation can be performed according to the content of the specification. A description is provided below in detail by using preferred embodiments of the present invention and with reference to the accompanying drawings.

### BRIEF DESCRIPTION OF THE DRAWINGS

FIG. 1 and FIG. 2 are schematic structural diagrams of a cutting assembly in different directions according to an embodiment of the present invention;
FIG. 3 is a schematic structural diagram of a cutting element in a cutting assembly according to an embodiment of the present invention;
FIG. 4 is a schematic structural diagram of an automatic lawn mower according to an embodiment of the present invention; and

FIG. 5 is a schematic structural diagram of a cutting assembly in different directions according to an embodiment of the present invention.

### DETAILED DESCRIPTION

The following further describes specific implementations of the present invention in detail with reference to the accompanying drawings and the embodiments. The following embodiments are used to describe the present invention.

It should be noted that the terms such as "top", "bottom", "left", "right", "inside", and "outside" in the present invention are only used to describe the present invention with reference to the accompanying drawings but are not used as limiting terms.

A cutting assembly of the present invention includes a cutting deck and at least two cutting element groups distributed in a circumferential direction at different heights of the cutting deck. An electric tool (for example, a lawn mower, including an autonomous lawn mower or a hand-propelled lawn mower) drives the cutting deck to rotate to drive the cutting element groups on the cutting deck to rotate to form at least two cutting trajectories. In different cutting trajectories, the distance between the cutting element groups and a center point of the cutting deck is not equal. The cutting element groups are disposed at the different heights of the cutting deck, so that as the lawn mower walks, the plurality of cutting element groups can cut grass repeatedly at different heights into sufficiently small pieces.

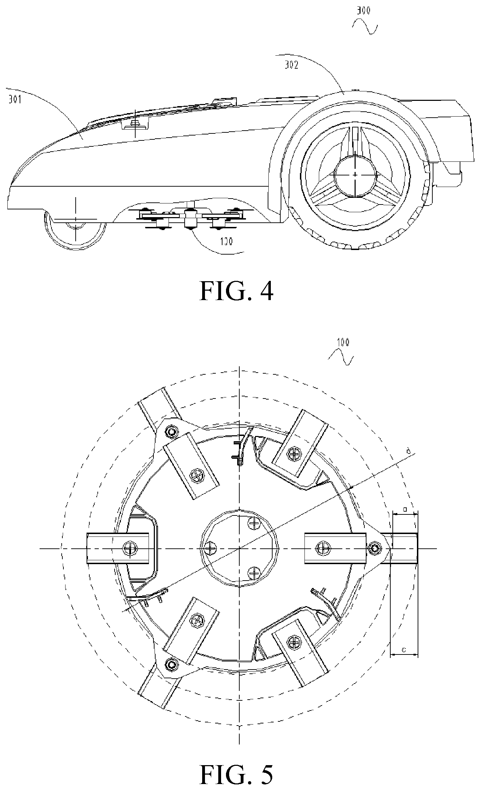

As shown in FIG. 4, an autonomous lawn mower 300 may include: a housing 301; a movement apparatus 302, supporting the housing, and used to drive the lawn mower to move; a cutting assembly 100, mounted on the housing, and used to perform cutting work; a driving apparatus (not shown), including a motor and an output shaft, connected to the cutting assembly, and driving the cutting assembly to perform cutting work; and a control apparatus, electrically connected to the movement apparatus 302, the cutting assembly 100, and the driving apparatus, and used to control the driving apparatus to drive the lawn mower to walk and/or work automatically. In an embodiment of the present application, the autonomous lawn mower may walk and/or work in a working area defined by a boundary. When battery power is low, the autonomous lawn mower may automatically return to a charging station in the working area for charging. The cutting assembly is mainly described in detail in the embodiments of the present application.

In an embodiment of the present application, the cutting assembly may be mounted on the autonomous lawn mower, and may include a cutting deck and at least two cutting element groups distributed in a circumferential direction at the cutting deck. The cutting deck is connected to the output shaft of the motor. Cutting element groups of the at least two cutting element groups are respectively located at different heights of the output shaft. The cutting deck responds to driving of the driving apparatus to drive the at least two cutting element groups to rotate to form at least two cutting trajectories. In different cutting trajectories, the distance between the cutting element group and a center point of the output shaft is not equal. The cutting assembly is disposed at a different height of the output shaft, so that during normal working of the lawn mower, the cutting assembly can cut grass at the same position repeatedly into sufficiently small pieces.

In an embodiment of the present application, the at least two cutting element groups are disposed layer by layer from a top to a bottom in a height direction of the cutting deck. The cutting trajectories formed by the rotation of the cutting element groups are circles. Adiameter of the cutting trajectory of the cutting element group located above is greater than a diameter of the cutting trajectory of the cutting element group located below of two adjacent cutting element groups. In this embodiment, as the lawn mower walks, the cutting element group located above touches grass first to cut the grass, and then the cutting element group located below touches the grass again to perform cutting, to implement repeated cutting of the grass at the same position.

In this embodiment, a radius difference between the cutting trajectories formed by the adjacent cutting element groups is less than or equal to 20 mm. By controlling the radius difference between two adjacent cutting element groups, the space occupied by cutting assembly on the lawn mower can be reduced, and the power consumption of the lawn mower can also be reduced.

In this embodiment, each cutting element group includes at least one cutting element. The at least one cutting element is evenly distributed in the circumferential direction of the cutting deck. The cutting elements are evenly disposed in the circumferential direction, so that the balance of the cutting element groups during working can be ensured. Further, a length by which the cutting element protrudes from the cutting deck is greater than or equal to 8 mm. The cutting element with this length can ensure that it is prevented from injuring animals or pedestrians while cutting the grass thoroughly.

In this embodiment, the cutting elements within each cutting element group are distributed in a staggered manner in the circumferential direction of the cutting deck. That is, phases of a plurality of cutting elements in the cutting element groups are different from each other. Specifically, if the plurality of cutting elements in the cutting element groups are separately projected onto a plane perpendicular to the output shaft of the motor. The projections of the plurality of cutting elements do not overlap with each other, and extension lines of the projections of the plurality of cutting elements do not overlap with each other. Alternatively, when the cutting element is a blade, after the blade is projected onto the plane perpendicular to the output shaft of the motor, a nonlinear projection may usually be obtained. In this case, although the cutting elements are distributed in a staggered manner in the circumferential direction of the cutting deck, because a projection of the cutting deck is nonlinear, the plurality of projections may partially overlap. The cutting elements are distributed in a staggered manner in the circumferential direction of the cutting deck, so that as the lawn mower walks, when the cutting element located above finishes cutting grass, the cutting element located below immediately performs secondary cutting on grass at the same position, thereby making maximum use of the cutting assembly in the lawn mower. In other embodiments of the present application, when the cutting elements in the cutting element groups at different heights are arranged in the circumferential direction of the cutting deck, cutting element groups at some heights may overlap. That is, some cutting elements have the same phase or all the cutting elements overlap. The overlap may be that extension lines of the projections of the blades onto the plane perpendicular to the output shaft of the motor are on the same straight line. Alternatively, when there are three or more layers of cutting element groups, two layers of cutting elements may have the same phase. This is not limited in the present application.

In this embodiment, the cutting deck is driven by the electric tool (the lawn mower) to rotate and drive the cutting elements on the cutting deck to operate. The cutting deck is a disk-shaped member, and preferably has a circular shape. A circular cutting deck rotates stably for even mass distribution of the cutting deck. Certainly, the cutting deck may have a triangular shape, a rectangular shape or the like according to an actual requirement. The cutting deck includes an upper surface close to the electric tool and a lower surface opposite to the upper surface. It is defined that a side of the upper surface is the top, and a side of the lower surface is the bottom. The cutting element groups are disposed layer by layer from the top to the bottom in the height direction of the cutting deck, or may be disposed on one same side (disposed together on the top or bottom) of the cutting deck. Generally, the cutting elements rotate with the cutting deck. The formed cutting trajectories are circles. To ensure repeated cutting during cutting of long grass, in the height direction of the cutting deck, a diameter of the cutting trajectory located above is greater than or equal to a diameter of the cutting trajectory located below. Preferably, from the top to the bottom, the cutting trajectories gradually decrease in size, and the cutting trajectories of all the cutting element groups have the same tangent. An angle between the tangent and a vertical central axis of the cutting deck is between 0 degrees and 90 degrees, so that long grass is gradually cut from top to bottom into smaller pieces.

In an embodiment of the present application, a diameter of the cutting deck is less than or equal to 250 mm. Compared with a lawn mower with a relatively large cutting deck, the diameter of the cutting deck is controlled, so that while the cutting deck meets normal grass cutting work of the lawn mower, it is ensured that the lawn mower can use relatively low power consumption to drive the cutting deck to rotate. Further, the diameter of the cutting deck is controlled to prevent the cutting deck from pressing grass during the working of the lawn mower.

In the present invention, to ensure that the assembly has a simple overall structure and lower manufacturing costs, a center of circle of each cutting trajectory is preferably located on the vertical central axis of the cutting deck. Certainly, without considering manufacturing costs, it may be set that the center of circle deviates from the vertical central axis. In addition, while it is ensured that long grass can be cut into sufficiently small pieces, to avoid a case that adjacent cutting element groups are excessively close to each other and as a result are prone to collision to cause damage, in the height direction of the cutting deck, a spacing between the adjacent cutting element groups is preferably between 10 mm and 20 mm.

Generally, at least one cutting element group is disposed on the upper surface or the lower surface of the cutting deck. The cutting element in the cutting element group is fixed on the cutting deck by a connecting member. In the present invention, a plurality of mounting portions used to fix the cutting elements are further disposed on the cutting deck, and are disposed between two adjacent cutting element groups. The mounting portions are disposed facing upward from the upper surface of the cutting deck and disposed facing downward from the lower surface of the cutting deck. A plurality of cutting element groups are separately mounted in a staggered manner on the upper surface or the lower surface of the cutting deck, so that a mounting space of the plurality of cutting element groups can be reduced, and mounting costs can be reduced. Certainly, the plurality of cutting element groups may all be mounted on the upper surface of the cutting deck or all be mounted on the lower surface of the cutting deck, which may be specifically chosen according to the positions of cutting elements. This is not limited in the present application. The mounting portion may be independently connected to the cutting deck or integrally formed with the cutting deck. The cutting element is fixed on the mounting portion by a connecting member. Preferably, the connecting member is a screw. A threaded hole fitting the screw is provided in the mounting portion, and there is a gap between the cutting element and the mounting portion. With the screw, each element can be connected and fixed on the mounting portion at low costs. Certainly, without considering costs, the cutting element may be fixed by another connecting member. The gap is provided between the cutting element and the mounting portion, so that when the cutting deck is driven by the electric tool to rotate, the cutting element rotates in the gap, thereby improving the cutting effect of the cutting element.

In the present invention, the structure of the cutting element belongs to the prior art in the industry, and specifically, may be a metal element such as a blade or a metal wire or a nonmetal element. Preferably, the cutting element is a blade, and includes a base portion and a blade edge. The blade edge is at least partially disposed on a periphery of the base portion. Each blade independently has a regular shape or an irregular shape, or may have a circular shape, a rectangular shape or another shape. Preferably, the blade is a straight blade, and blade edges are disposed on both sides of the blade.

In the present invention, in a single cutting element group, a quantity of cutting elements is preferably 3. The three cutting elements are evenly disposed at equal intervals in the circumferential direction of the vertical central axis of the cutting deck, to reach a balance between the cutting capability and the load of the electric tool, thereby implementing higher cutting efficiency. Certainly, the quantity of the cutting elements is not limited thereto, and may be set according to an actual requirement.

In the present invention, preferably, three cutting element groups are disposed, and the three cutting element groups are sequentially disposed at an upper position, a middle position, and a lower position of the cutting deck. That is, one conventional cutting element group mounted in the plane of the cutting deck is kept, and one cutting element group is separately added at the top and the bottom of the cutting deck. Certainly, the quantity of the cutting element groups is not limited thereto, and may be set according to an actual requirement.

The cutting assembly of the present invention is preferably mounted on the lawn mower, or certainly may be used on another electric tool. The lawn mower mainly includes a housing used for accommodation and protection, a movement apparatus for movement, the foregoing cutting assembly for cutting, and a driving apparatus connected to the cutting assembly and driving the cutting assembly to operate. The driving apparatus is mounted in the housing. The driving apparatus is provided with a motor and an output shaft connecting the motor and the cutting deck, and is used to drive the cutting deck to rotate. The cutting deck rotates to drive the cutting elements to rotate to mow a lawn. Other structures of the lawn mower belong to mature technologies in the field, and details are not described herein again.

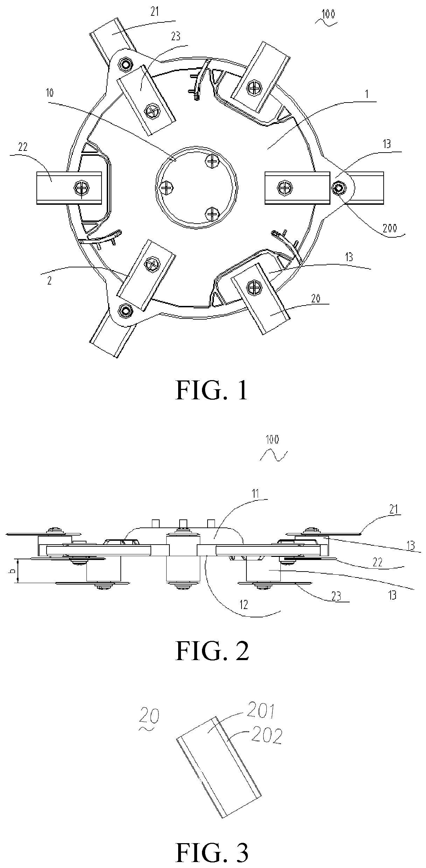

FIG. 1 is a bottom view of the cutting assembly mounted on the autonomous lawn mower shown in FIG. 4. FIG. 2 is a side view of the cutting assembly shown in FIG. 1. The cutting assembly in the embodiments of the present invention includes a cutting deck 1 and three cutting element groups 2 disposed at different heights of the cutting deck 1. As shown in FIG. 2, the three cutting element groups 2 are the first cutting element group 21 disposed at a top of the cutting deck 1, the second cutting element group 22 in a plane of the cutting deck 1, and the third cutting element group 23 disposed at a bottom of the cutting deck 1. Three cutting elements 20 are disposed in each cutting element group 2. The three cutting elements 20 are evenly disposed at equal intervals in a circumferential direction of a vertical central axis of the cutting deck 1. That is, the first cutting element group 21, the second cutting element group 22, and the third cutting element group 23 are concentric circles with different diameters, and the center of circles are located on the vertical central axis of the cutting deck 1. The cutting elements 20 are evenly disposed in the circumferential direction, to reach a balance between the cutting capability and the load of the electric tool, thereby implementing higher cutting efficiency. Certainly, in another embodiment, a quantity of the cutting element groups 2 and a quantity of the cutting elements 20 may be selected according to an actual case.

A fitting surface 10 for joining an output shaft (not shown) of a motor, an upper surface 11 close to the output shaft, and a lower surface 12 opposite to the upper surface 11 are disposed on the cutting deck 1. The fitting surface 10 is provided with a plurality of fitting holes (not shown). In this embodiment, screws are disposed in the fitting holes to fix the cutting deck 1 on the output shaft. Certainly, in another embodiment, a part such as a bolt or a rivet or another fitting structure may be used to connect the cutting deck 1 and the output shaft. The motor drives the cutting deck 1 through the output shaft to rotate and drive the cutting elements 20 to rotate, to enable the cutting element groups 2 to separately from cutting trajectories at different heights of the cutting deck 1, and because the cutting elements 20 rotate along with the cutting deck 1, the cutting trajectory formed by each cutting element group 2 is a circle.

In this embodiment, the three cutting element groups 2 are disposed layer by layer from the top to the bottom in the height direction of the cutting deck 1, and are distributed in a stepped tower form. That is, in a height direction of the output shaft, a diameter of the cutting trajectory located above is greater than a diameter of the cutting trajectory located below. As shown in FIG. 5, a diameter d of the cutting deck is less than or equal to 250 mm. A radius difference a between the cutting trajectories formed by the two adjacent cutting element groups is less than or equal to 20 mm. Because the cutting trajectory located above has a larger size, as the lawn mower shown in FIG. 4 is used to cut grass, the first cutting element group 21 located at the top touches grass first to cut an upper end of the grass; the second cutting element group 22 located in the plane of the cutting deck 1 subsequently cuts the grass; and the third cutting element group 23 located at the bottom cuts a portion of the grass close to the ground, thereby ensuring that long grass is cut into smaller pieces. In addition, while it is ensured that long grass can be cut into sufficiently small pieces, to avoid a case that two adjacent cutting element groups 2 are excessively close to each other and as a result are prone to collision to cause damage, in the height direction of the cutting deck 1, as shown in FIG. 2, a spacing b between the adjacent cutting element groups 2 is between 10 mm and 20 mm.

In this embodiment, mounting portions 13 used to fix the cutting elements 20 are further disposed on the cutting deck 1, and are separately used to fix the cutting elements 20 in the first cutting element group 21 and the third cutting element group 23. As shown in FIG. 1, when the cutting elements in the cutting element groups are distributed in a staggered manner in the circumferential direction of the cutting deck, it may be that the first cutting element group 21 and the third cutting element group 23 have the same phase different from the phase of the second cutting element group. A length c by which the cutting element protrudes from the cutting deck is greater than or equal to 8 mm. Specifically, the mounting portions 13 used to mount the cutting elements 20 in the first cutting element group 21 are disposed protruding upward from the upper surface 11, the second cutting element group 21 is mounted on the lower surface 12 of the cutting deck 1, and mounting portions 13 used to mount the cutting elements 20 in the third cutting element group 23 are disposed protruding downward from the lower surface 12. In this embodiment, the mounting portions 13 and the cutting deck 1 are integrally formed, and certainly may be separately mounted in another embodiment. A mounting hole (not shown) is provided in the mounting portion 13. In this embodiment, the cutting element 20 is fixed at the mounting portion 13 by a connecting member 200. The connecting member 200 in this embodiment is a screw. Certainly, in another embodiment, a part such as a bolt or a rivet or another fitting structure may be used to connect the cutting element 20 and the mounting portion. The gap is provided between the cutting element 20 and the mounting portion 13, so that when the cutting deck 1 is driven by the electric tool to rotate, the cutting element 20 rotates in the gap, thereby improving the cutting effect of the cutting element.

With reference to FIG. 3, the cutting element 20 in this embodiment is a straight blade of a rectangular shape, and includes a base portion 201 and a blade edge 202. The blade edge 202 is disposed on a periphery of the base portion 201. Certainly, in another embodiment, the shape and structure of the cutting element 20 may be selected according to an actual case. For example, the shape may be a regular shape such as a circular shape or a triangular shape or an irregular shape, or a metal element such as a metal wire or a nonmetal element may be used.

In summary, in the cutting assembly and the lawn mower of the present invention, the at least two cutting element groups are disposed at the different heights of the cutting deck, to enable the cutting assembly to be driven by the lawn mower to form the at least two cutting trajectories, and the cutting trajectories are distributed at the different heights of the cutting deck, so that long grass is cut repeatedly into smaller pieces.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The above embodiments only express several implementations of the present invention, which are described specifically and in detail, and therefore cannot be construed as a limitation to the patent scope of the present invention. It should be noted that, a person of ordinary skill in the art may further make some variations and improvements without departing from the concept of the present invention, and the variations and improvements belong to the protection scope of the present invention. Therefore, the protection scope of the patent of the present invention shall be topic to the claims.

## Claims

1. A lawn mower, comprising:
a housing;
a cutting assembly, mounted at the housing, and configured to perform cutting work; and
a driving apparatus, comprising a motor and an output shaft, connected to the cutting assembly, and configured to drive the cutting assembly to perform cutting work, wherein
the cutting assembly comprises a cutting deck and at least two cutting element groups, the cutting deck is connected to the output shaft, cutting element groups of the at least two cutting element groups are respectively located at different heights of the output shaft,
the cutting deck is configured to respond to driving of the driving apparatus to drive the at least two cutting element groups to rotate to form at least two cutting trajectories, and in different cutting trajectories, the distance between the cutting element group and a center point of the output shaft is not equal,
each cutting element group comprises at least two cutting elements, and the at least two cutting elements are evenly distributed in the circumferential direction of the cutting deck,
a length by which the cutting element protrudes from the cutting deck is greater than or equal to 8 mm,
the cutting trajectories are circles, a diameter of the cutting trajectory of the cutting element group located above is greater than a diameter of the cutting trajectory of the cutting element group located below of two adjacent cutting element groups, and the at least two cutting element groups are disposed layer by layer from the top to the bottom in a height direction of the cutting deck,
**characterized in that**
a radius difference between the cutting trajectories formed by the two adjacent cutting element groups is less than or equal to 20 mm, and
a spacing between the adjacent cutting element groups is between 10 mm and 20 mm.

2. The lawn mower according to claim 1, wherein the cutting elements within each cutting element group are distributed in a staggered manner in the circumferential direction of the cutting deck.

3. The lawn mower according to claim 1, wherein a diameter of the cutting deck is less than or equal to 250 mm.

4. The lawn mower according to claim 1, wherein mounting portions are disposed on the cutting deck, the mounting portions are used to fix the cutting element groups, and the mounting portions are located on an upper surface and a lower surface of the cutting deck.

5. The lawn mower according to claim 4, wherein the cutting element groups are rotatably disposed on the mounting portions by connecting members.

6. The lawn mower according to claim 1, wherein the cutting blade is a straight blade, and blade edges are disposed on both sides of the blade.

7. The lawn mower according to claim 1, configured to walk and/or work in a working area defined by a boundary, and further comprising:
a movement apparatus, configured to support the housing, and useable to drive the lawn mower to move; and
a control apparatus, electrically connected to the movement apparatus, the cutting assembly, and the driving apparatus, and useable to control the driving apparatus to drive the lawn mower to move and/or work automatically.

## Patentansprüche

1. Rasenmäher, umfassend:
ein Gehäuse,
eine an dem Gehäuse montierte Schneidbaugruppe, die zum Durchführen von Schneidarbeit ausgestaltet ist, und
eine Antriebsvorrichtung, die einen Motor und eine Ausgangswelle umfasst, mit der Schneidbaugruppe verbunden und dazu ausgestaltet ist, die Schneidbaugruppe zum Durchführen von Schneidarbeit anzutreiben, wobei
die Schneidbaugruppe ein Schneidwerk und mindestens zwei Schneidelementgruppen umfasst, das Schneidwerk mit der Ausgangswelle verbunden ist und Schneidelementgruppen der mindestens zwei Schneidelementgruppen jeweils auf unterschiedlichen Höhen der Ausgangswelle angeordnet sind,
das Schneidwerk dazu ausgestaltet ist, auf das Antreiben der Antriebsvorrichtung zu reagieren, um die mindestens zwei Schneidelementgruppen zum Drehen anzutreiben, um mindestens zwei Schneidbahnen zu bilden, wobei der Abstand zwischen der Schneidelementgruppe und einem Mittelpunkt der Ausgangswelle in unterschiedlichen Schneidbahnen nicht gleich ist,
jede Schneidelementgruppe mindestens zwei Schneidelemente umfasst und die mindestens zwei Schneidelemente in der Umfangsrichtung des Schneidwerks gleichmäßig verteilt sind,
eine Länge, um die das Schneidelement aus dem Schneidwerk herausragt, größer oder gleich 8 mm ist,
die Schneidbahnen Kreise sind, ein Durchmesser der Schneidbahn der oben angeordneten Schneidelementgruppe größer als ein Durchmesser der Schneidbahn der Schneidelementgruppe ist, die von zwei benachbarten Schneidelementgruppen unten angeordnet ist, und die mindestens zwei Schneidelementgruppen schichtweise von oben nach unten in einer Höhenrichtung des Schneidwerks angeordnet sind,
**dadurch gekennzeichnet, dass**
eine Radiusdifferenz zwischen den von den beiden benachbarten Schneidelementgruppen gebildeten Schneidbahnen kleiner oder gleich 20 mm ist und
ein Abstand zwischen den benachbarten Schneidelementgruppen zwischen 10 mm und 20 mm beträgt.

2. Rasenmäher nach Anspruch 1, wobei die Schneidelemente in jeder Schneidelementgruppe in der Umfangsrichtung des Schneidwerks versetzt verteilt sind.

3. Rasenmäher nach Anspruch 1, wobei ein Durchmesser des Schneidwerks kleiner oder gleich 250 mm ist.

4. Rasenmäher nach Anspruch 1, wobei Montageabschnitte auf dem Schneidwerk angeordnet sind, die Montageabschnitte zum Befestigen der Schneidelementgruppen dienen und die Montageabschnitte auf einer oberen Fläche und einer unteren Fläche des Schneidwerks angeordnet sind.

5. Rasenmäher nach Anspruch 4, wobei die Schneidelementgruppen durch Verbindungsglieder drehbar an den Montageabschnitten angeordnet sind.

6. Rasenmäher nach Anspruch 1, wobei das Schneidmesser ein gerades Messer ist und Messerkanten an beiden Seiten des Messers angeordnet sind.

7. Rasenmäher nach Anspruch 1, der dazu ausgestaltet ist, sich in einem durch eine Begrenzung definierten Arbeitsbereich zu bewegen und/oder zu arbeiten, und der ferner Folgendes umfasst:
eine Bewegungsvorrichtung, die dazu ausgestaltet ist, das Gehäuse zu stützen, und die dazu verwendbar ist, den Rasenmäher zur Bewegung anzutreiben, und
eine Steuervorrichtung, die elektrisch mit der Bewegungsvorrichtung, der Schneidbaugruppe und der Antriebsvorrichtung verbunden und dazu verwendbar ist, die Antriebsvorrichtung so zu steuern, dass der Rasenmäher dazu angetrieben wird, um sich automatisch zu bewegen und/oder zu arbeiten.

## Revendications

1. Tondeuse à gazon, comprenant :
un carter ;
un ensemble de coupe, monté au niveau du carter, et configuré pour effectuer un travail de coupe ; et
un appareil d'entraînement, comprenant un moteur et un arbre de sortie, relié à l'ensemble de coupe, et configuré pour entraîner l'ensemble de coupe pour qu'il effectue un travail de coupe,
l'ensemble de coupe comprenant un plateau de coupe et au moins deux groupes d'éléments de coupe, le plateau de coupe étant relié à l'arbre de sortie, les groupes d'éléments de coupe des au moins deux groupes d'éléments de coupe se trouvant respectivement à des hauteurs différentes de l'arbre de sortie,
le plateau de coupe étant configuré pour répondre à l'entraînement de l'appareil d'entraînement pour entraîner les au moins deux groupes d'éléments de coupe en rotation pour former au moins deux trajectoires de coupe et, sur différentes trajectoires de coupe, la distance entre le groupe d'éléments de coupe et un point central de l'arbre de sortie n'étant pas égale,
chaque groupe d'éléments de coupe comprenant au moins deux éléments de coupe, et les au moins deux éléments de coupe étant régulièrement répartis dans la direction circonférentielle du plateau de coupe,
une longueur de laquelle l'élément de coupe dépasse du plateau de coupe étant supérieure ou égale à 8 mm,
les trajectoires de coupe étant des cercles, un diamètre de la trajectoire de coupe du groupe d'éléments de coupe situé au-dessus étant supérieur à un diamètre de la trajectoire de coupe du groupe d'éléments de coupe situé au-dessous parmi deux groupes d'éléments de coupe adjacents, et les au moins deux groupes d'éléments de coupe étant disposés en couches de haut en bas dans une direction de hauteur du plateau de coupe,
**caractérisée en ce que**
une différence de rayon entre les trajectoires de coupe formées par les deux groupes d'éléments de coupe adjacents est inférieure ou égale à 20 mm, et
un espacement entre les groupes d'éléments de coupe adjacents est compris entre 10 mm et 20 mm.

2. Tondeuse à gazon selon la revendication 1, dans laquelle les éléments de coupe dans chaque groupe d'éléments de coupe sont répartis de manière échelonnée dans la direction circonférentielle du plateau de coupe.

3. Tondeuse à gazon selon la revendication 1, dans laquelle un diamètre du plateau de coupe est inférieur ou égal à 250 mm.

4. Tondeuse à gazon selon la revendication 1, dans laquelle des parties de montage sont disposées sur le plateau de coupe, les parties de montage sont utilisées pour fixer les groupes d'éléments de coupe, et les parties de montage sont situées sur une surface supérieure et une surface inférieure du plateau de coupe.

5. Tondeuse à gazon selon la revendication 4, dans laquelle les groupes d'éléments de coupe sont disposés de manière rotative sur les parties de montage au moyen d'éléments de liaison.

6. Tondeuse à gazon selon la revendication 1, dans laquelle la lame de coupe est une lame droite, et les bords de lame sont disposés des deux côtés de la lame.

7. Tondeuse à gazon selon la revendication 1, configurée pour se déplacer et/ou travailler dans une zone de travail définie par une limite, et comprenant en outre :
un appareil de déplacement, configuré pour supporter le carter, et utilisable pour entraîner la tondeuse à gazon de façon à ce qu'elle se déplace ; et
un appareil de commande, relié électriquement à l'appareil de déplacement, à l'ensemble de coupe et à l'appareil d'entraînement, et utilisable pour commander l'appareil d'entraînement de façon à ce qu'il entraîne la tondeuse à gazon pour qu'elle se déplace et/ou travaille automatiquement.
